# FASCICULE DE BREVET EUROPEEN

(11) **EP 1 841 571 B1**
(45) Date de publication et mention de la délivrance du brevet: **08.10.2008**
(21) Numéro de dépôt: 05809272.7
(22) Date de dépôt: 19.10.2005
(51) Int. Cl.: B25J 15/00

(54) **OUTIL DE ROBOT MANIPULATEUR AVEC DES RAMPES PORTANT DES EQUIPEMENTS DE PREHENSION D' OBJETS**
HANDHABUNGSROBOTERWERKZEUGE MIT RAMPEN TRAGENDEN VORRICHTUNGEN ZUM ERGREIFEN VON OBJEKTEN
MANIPULATOR ROBOT TOOLS WITH RAMPS BEARING EQUIPMENT ITEMS FOR GRIPPING OBJECTS

(30) Priorité: 20.10.2004 FR 0411136
(43) Date de publication de la demande: 10.10.2007
(73) Titulaire: SIDEL PARTICIPATIONS, 76930 Octeville-sur-Mer (FR)
(72) Inventeur: BAUMSTIMLER, Gilles, F-76930 Octeville-sur-Mer (FR)
(74) Mandataire: Bérogin, Francis
(86) Numéro de dépôt international: PCT/FR2005/002586
(87) Numéro de publication internationale: WO 2006/042961

(56) Documents cités:
- WO-A1-95/01908
- US-A- 5 018 776

## Description

La présente invention concerne un outil de robot manipulateur et, plus particulièrement, un outil selon le préambule de la revendication 1. Un tel outil est connu du document US-A-5 018 776. De tels outils sont utilisés pour prendre, déplacer et transférer des objets de toutes sortes dans des installations de préparation et de conditionnement ou de reconditionnement de ces objets.

Les outils de ces robots sont généralement affectés à une tâche bien précise, immuable dans le temps et, de ce fait, ils ne sont pas très bien adaptés, par manque de flexibilité, aux travaux que l'on peut rencontrer dans certains cas et qui peuvent être très variés.

Ainsi par exemple, ce problème de flexibilité se rencontre dans le domaine du reconditionnement d'objets comme des bouteilles qui sont parfois préparées et conditionnées en masse pour être livrées à des centrales d'achat, mais qu'il faut ensuite reconditionner par lots plus petits pour des détaillants.

Les bouteilles sont manipulées par un robot dont l'outil comporte un grand nombre de têtes de préhension et ces têtes sont généralement choisies en fonction du type de bouteilles à manipuler. La répartition des têtes sur l'outil dépend aussi du schéma de conditionnement prévu pour ces bouteilles.

Pour pouvoir faire face aux variations de forme et de dimension des bouteilles ou aux différents schémas de conditionnement, c'est-à-dire, l'agencement des bouteilles les unes par rapport aux autres lors du conditionnement secondaire, il est bien souvent nécessaire de changer d'outil, ce qui implique de disposer en permanence d'un stock d'outils adaptés aux différents schémas.

L'opération qui consiste à changer d'outil sur un robot manipulateur n'est pas une opération facile du fait que ces outils sont relativement lourds ; leur poids est de l'ordre de 150 à 400 kg et plus. Cette opération met en oeuvre des moyens importants. Elle peut se faire de façon automatique, avec des moyens de manutention adaptés, ou elle peut également être effectuée de façon manuelle et dans ce cas, elle exige l'intervention d'au moins un opérateur avec utilisation d'un chariot élévateur.

Les mêmes difficultés liées à la manutention de l'outil se retrouvent pour de simples opérations de maintenance ou d'entretien de ces outils et en particulier pour des interventions sur les têtes de préhension.

Pour surmonter ces dernières difficultés, l'outil peut être divisé, comme décrit dans le document US 5018776, en plusieurs parties : une partie fixe massive formant châssis et, associés à ce châssis, des éléments démontables qui comportent des têtes de préhension intégrées.

La présente invention propose un perfectionnement aux outils de robot manipulateur qui permet non seulement de surmonter les problèmes détaillés ci-dessus, mais qui permet en plus de donner à l'outil un véritable caractère polyvalent en accord avec le souci de flexibilité. Elle permet aussi de rendre moins complexes et plus rapides les opérations d'entretien et toutes les opérations de manutention liées au changement des têtes de préhension, ce qui est valable aussi dans le cadre d'un changement de type de production avec, par exemple, la mise en oeuvre d'un nouveau schéma de conditionnement. Toutes les interventions au niveau de l'outil s'en trouvent simplifiées.

L'outil selon l'invention est defini dans la revendication 1.

Un tel outil comprend un corps sur lequel se greffent des équipements qui sont adaptés aux travaux à effectuer comme, par exemple, des équipements de préhension, lequel corps comporte, à sa partie inférieure, des moyens en forme de glissières qui sont interposés entre ledit corps et des rampes qui portent lesdits équipements, lesquelles glissières sont parallèles entre elles et sont constituées de rails fixes solidaires dudit corps, chacun de ces rails est muni de moyens d'assemblage du genre rainure pour accueillir un autre rail qui lui est mobile, de forme complémentaire, situé à la partie supérieure de chacune desdites rampes, et ces couples de rails fixes et mobiles sont munis de moyens qui permettent de solidariser rapidement chaque rampe sur le corps, lesquels moyens de solidarisation consistent, d'une part, en un talon disposé à la partie arrière du rail fixe dudit corps, lequel talon forme une butée pour le calage longitudinal du rail mobile et de la rampe correspondante et, d'autre part, à la partie avant, ces moyens de solidarisation consistent en attache rapide interposée entre le rail de ladite rampe et ledit rail fixe, laquelle attache rapide est, par exemple, du type dénommé couramment "sauterelle".

Cette dissociation des rampes par rapport au corps de l'outil permet de simplifier toutes les opérations qui consistent à changer de type de têtes de préhension, par exemple. Chaque rampe est manipulable de façon individuelle et son poids est suffisamment modeste pour qu'un opérateur puisse intervenir directement sans l'aide d'un chariot élévateur.

Selon une autre disposition de l'invention, la rampe se présente sous la forme d'un caisson qui comporte, à sa partie supérieure, le rail mobile du système de glissières et, à sa partie inférieure, un équipement de préhension classique constitué de têtes du type tulipe, à fonctionnement pneumatique, lequel caisson renferme les différents conduits et organes de raccordement et d'alimentation desdites têtes.

Selon une variante de l'invention, la rampe se présente sous la forme d'une barre, réalisée en matériau synthétique, usinée à sa partie supérieure pour former le rail du système de glissières, et usinée dans sa masse pour former des canaux nécessaire à l'alimentation d'équipements du genre ventouses, ou autres, lesquelles ventouses sont disposées à la partie inférieure de ladite barre.

Toujours selon l'invention, un dispositif de raccordement rapide pour l'alimentation pneumatique des têtes de préhension ou des ventouses, est interposé entre la face d'extrémité arrière de la rampe et le talon du rail fixe du corps, lequel talon se présente sous la forme d'une véritable paroi disposée à l'équerre, à l'extrémité dudit rail fixe.

Selon une autre variante de l'invention, des rampes peuvent comporter des aménagements qui permettent de réaliser un système de pinces, chaque aménagement consiste, par exemple, en une plaque installée sur une rampe, faisant office de mâchoire, laquelle plaque peut aussi comporter des moyens du genre tiges qui forment une sorte de contreventement et de renfort pour lesdites mâchoires, en coopération avec des moyens du genre palier disposés sur la rampe adjacente.

Selon une autre disposition de l'invention, des moyens de calage pour maintenir la rampe dans un plan vertical sont interposés entre l'extrémité de chaque rampe et le talon situé à l'extrémité du rail fixe du corps, lesquels moyens sont positionnés à la partie inférieure dudit talon et ils sont constitués d'une cheville de centrage disposée par exemple sur ledit talon, coopérant avec un orifice aménagé dans ladite extrémité de ladite rampe.

Toujours selon l'invention, chaque rampe peut comporter sur ses flancs, des orifices disposés à sa partie avant et à sa partie arrière, permettant son stockage par accrochage sur des bras supports horizontaux, et elle peut comporter également des poignées disposées entre lesdits orifices d'accrochage pour faciliter sa manipulation.

L'invention concerne également l'installation qui comporte le type d'outil détaillé auparavant, et en particulier l'installation de reconditionnement de bouteilles comprenant - au moins un poste de prise en charge, alimenté par au moins une ligne d'introduction de palettes, ou autres, contenant des bouteilles à reconditionner, - au moins une ligne de transit ou d'évacuation desdites palettes, ou autres, - au moins une ligne d'amenée et de stockage de palettes ou de caisses pour l'accueil des bouteilles reconditionnées, - au moins une ligne d'évacuation des palettes ou des caisses de bouteilles nouvellement conditionnées et au moins un poste de palettisation, - un robot manipulateur équipé d'au moins un outil mobile pour balayer tous lesdits postes et lesdites lignes, - des moyens de stockage des rampes en forme de magasin, pour mettre lesdites rampes à disposition de l'opérateur à proximité de l'outil, lequel magasin est constitué d'un châssis susceptible d' être monté sur roulettes, lequel châssis est muni d'une structure centrale en forme de panneau sur laquelle sont fixés des bras horizontaux disposés par couples, à plusieurs niveaux pour accueillir lesdites rampes.

Mais l'invention sera encore détaillée à l'aide de la description suivante et des dessins annexés, donnés à titre indicatif et dans lesquels :
- la figure 1 est une élévation d'un outil représenté de façon simplifiée, en vue de face, avec des rampes munies de têtes de préhension en forme de tulipe ;
- la figure 2 montre l'outil en vue de côté, avec les mêmes rampes que sur la figure 1 ;
- la figure 3 montre, d'une façon plus détaillée, l'assemblage et la connexion de l'extrémité d'une rampe avec le talon du rail qui est fixé sur le corps de l'outil ;
- la figure 4 montre un outil qui est représenté d'une façon schématique plus complète, vu de côté, et cet outil est équipé d'un autre type de rampe comme, par exemple l'équipement constitué de ventouses ;
- la figure 5 montre, d'une façon plus détaillée, l'extrémité de la rampe représentée figure 4, côté talon ;
- la figure 6 montre un outil identique à celui de la figure 4, équipé de rampes qui sont aménagées pour effectuer des opérations de préhension de caisses, par exemple ;
- la figure 7 montre, en vue de face, un outil équipé, d'une part, de deux rampes à ventouses comme représentées figure 4 et, d'autre part, des rampes représentées figure 6, ledit outil étant en position inactive face à une caisse ;
- la figure 8 montre, toujours en vue de face, l'outil de la figure 7 en position active de préhension de la caisse ;
- la figure 9 montre une installation de reconditionnement, par exemple, qui utilise un outil polyvalent selon l'invention ;
- la figure 10 montre une variante d'installation de reconditionnement ;
- la figure 11 montre un dispositif de stockage des rampes, apte à être positionné à proximité du robot de l'une ou l'autre des installations des figures 9 et 10, facilitant le travail de l'opérateur.

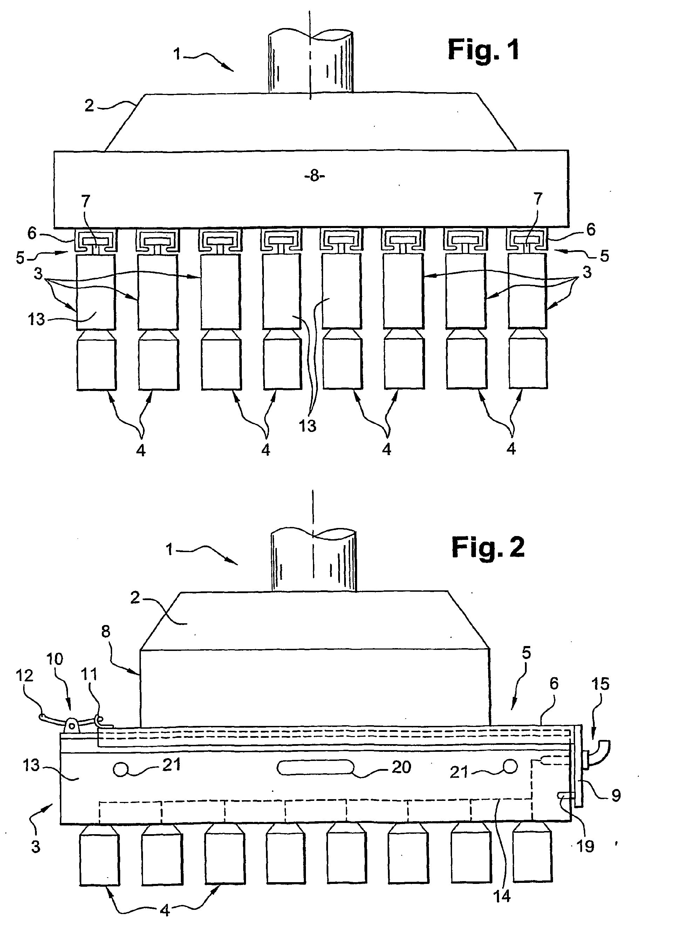

Tel que représenté figure 1, l'outil (1) comprend un corps (2) qui peut être structuré avec des aménagements classiques qui lui confèrent des fonctions particulières. Ces aménagements et fonctions seront détaillés plus loin dans la description au fur et à mesure des besoins.

Sur la figure 1, l'outil (1) comporte des rampes (3) qui s'étendent sous le corps (2), et ces rampes (3) comportent, à leur partie inférieure, des têtes (4) en forme de tulipe, du type à fonctionnement pneumatique, pour réaliser la préhension de bouteilles, non représentées.

Des moyens particuliers sont interposés entre le corps (2) et chaque rampe (3) pour permettre leur assemblage. Ces moyens sont constitués d'un système de glissières (5) dont une partie, en forme de rail (6) fixe est solidaire du corps (2) et dont l'autre partie, en forme de rail (7) également, mais mobile, est disposée sur chaque rampe (3), à sa partie supérieure. Le rail (6) comprend par exemple une rainure et sa section est en forme de C disposé à l'horizontale ; le rail (7) de la rampe (3) a une section de forme complémentaire ; cette section est en forme de H couché ou en forme de Té.

Ces rampes (3) sont enfilées par la face avant (8) de l'outil et elles sont immobilisées par rapport au corps (2) au moyen d'un système de solidarisation qui comprend, comme représenté figure 2, - un talon (9) situé au niveau de l'extrémité arrière du rail (6) fixe, qui fait office de butée et, - une attache (10) rapide du genre sauterelle, située au niveau de l'extrémité avant dudit rail (6). Cette attache (10) rapide comprend un crochet (11) fixé sur l'extrémité avant du rail (6), et une poignée de manoeuvre (12) disposée sur l'extrémité avant du rail (7) mobile de la rampe (3).

Un opérateur peut donc effectuer très rapidement un démontage des rampes (3) par un simple dégrafage de l'attache (10) rapide située à l'avant de l'outil et par une extraction desdites rampes (3) par glissement grâce au système de glissières (5).

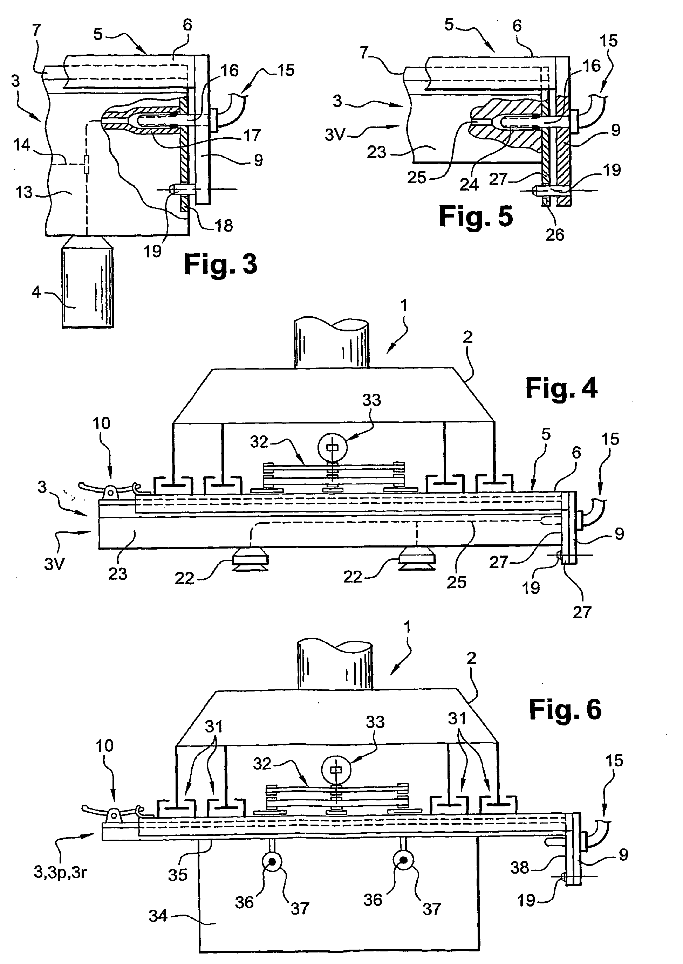

Chaque rampe (3) se présente sous la forme d'un caisson (13) qui s'étend entre le système de glissières (5) et la série de têtes (4). Ce caisson (13) renferme les conduits (14) qui servent à alimenter les différentes têtes (4) de préhension en air comprimé. Le raccordement de ces conduits (14) à la source d'air comprimé s'effectue au moyen d'un raccord (15) rapide qui se situe du côté de l'extrémité arrière de la rampe (3). Ce raccordement est représenté de façon plus détaillée sur la figure 3. La partie fixe (16) du raccord (15) rapide est installée sur le talon (9) et sa partie mobile (17) est installée sur l'extrémité du caisson (13), sur sa paroi (18).

Pour s'assurer d'un parfait positionnement des rampes (3), dans le plan vertical, et de leur immobilisation totale, le talon (9) de chaque rail (6) se prolonge vers la partie inférieure du caisson (13). Ce talon (9) forme une véritable paroi et il comporte des moyens pour caler la rampe (3) avec laquelle il coopère. Ces moyens de calage sont constitués d'une cheville (19) implantée, par exemple, dans le talon (9), à sa partie inférieure, et cette cheville coopère avec un orifice aménagé dans la paroi (18) d'extrémité dudit caisson.

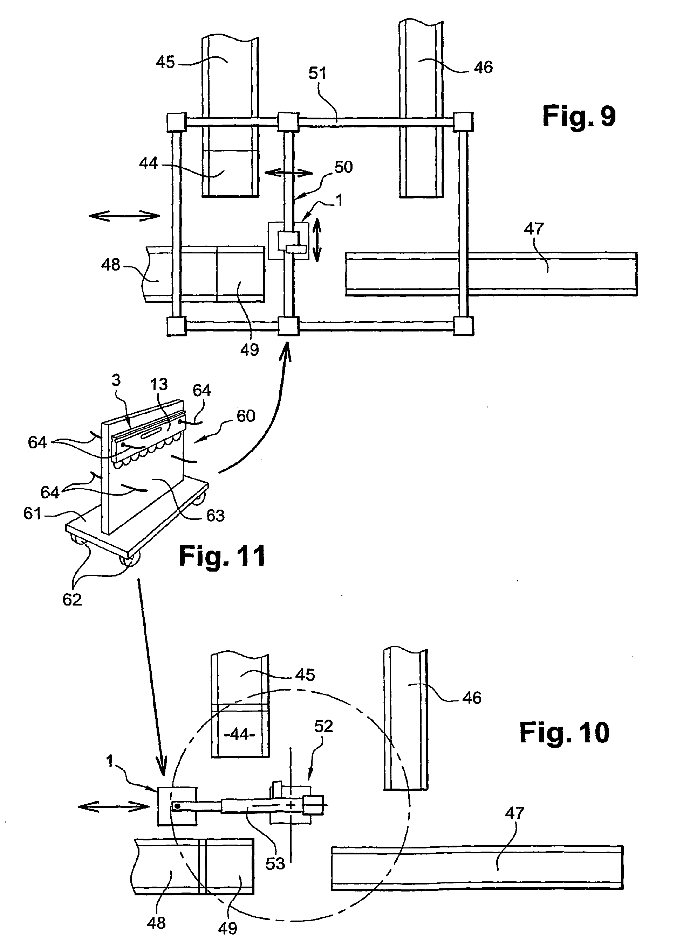

Pour faciliter la manipulation des rampes (3), des poignées (20) de manoeuvre sont prévues dans les flancs des caissons (13). Ces poignées sont disposées entre des orifices (21) qui traversent chaque caisson (13), lesquels orifices (21) sont disposés à chaque extrémité supérieure dudit caisson (13) et permettent de suspendre les rampes (3) dans un magasin qui sera détaillé plus loin en liaison avec la figure 11.

La figure 4 montre un outil (1) équipé avec une autre forme de rampe (3). Cette variante de rampe, repérée aussi (3v), comporte des ventouses (22) qui permettent de réaliser d'autres opérations avec l'outil (1). Les ventouses (22) sont installées sur la face inférieure de la rampe (3v), laquelle rampe (3v) se présente sous la forme d'une barre (23) réalisée en matériau synthétique, par exemple, et elle comporte à sa partie supérieure, un rail (7) obtenu par usinage de ladite barre (23), lequel rail (7) coopère avec le rail (6) fixe qui est solidaire du corps (2) de l'outil.

L'extrémité arrière de la rampe (3v) est représentée figure 5 d'une façon plus détaillée ; le système d'alimentation des ventouses (22) est identique à celui qui est utilisé pour les rampes (3) munies de têtes (4) de préhension. Le raccord (15) rapide comporte la même partie fixe (16) qui est solidaire du talon (9). Cette partie fixe (16) coopère avec un alésage (24) aménagé dans la masse de la barre (23) et cet alésage (24) se prolonge par un conduit foré (25) qui communique avec les ventouses (22) pour les mettre en dépression.

Toujours à son extrémité arrière, la rampe (3v) comporte un orifice (26) qui coopère avec la cheville (19) pour réaliser un calage de ladite rampe dans le plan vertical. Cet orifice (26) est réalisé dans un talon (27) qui est en saillie par rapport au dessous de la barre (23) ; ce talon (27) peut faire partie de ladite barre (23), de façon monobloc, ou, comme représenté figures 4 et 5, être rapporté et fixé par tout moyen approprié sur l'extrémité de cette dernière.

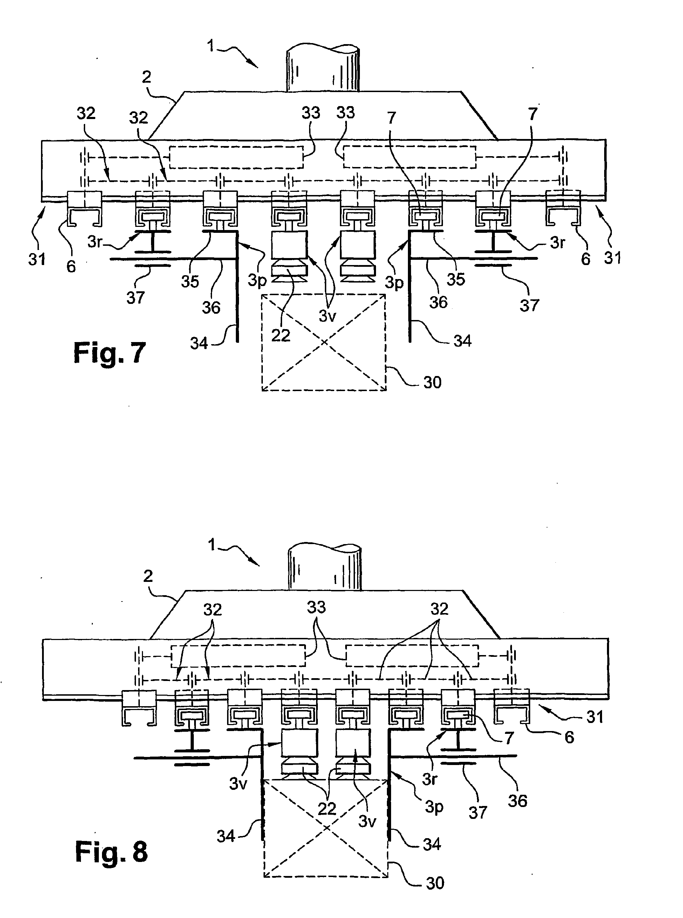

L'outil (1) peut ainsi, grâce à son système de glissières (5), combiner des rampes munies de différents types d'équipements, adaptés aux travaux à effectuer. Ces équipements peuvent être différents les uns des autres pour certains types de travaux, comme représenté figure 7 et 8.

Sur ces figures 7 et 8, l'outil (1) comporte des rampes (3v) du type à ventouses et un système de pinces, pour manipuler une ou plusieurs caisses (30). Le système de pinces est lui-même constitué de plusieurs rampes (3) : - deux rampes (3p) formant des mâchoires et deux rampes (3r) associées aux précédentes, formant des renforts pour lesdites mâchoires.

La figure 6 montre, en vue de côté, le système de pinces avec la rampe (3p) et la rampe (3r) qui seront détaillées plus loin.

Figure 7, l'outil est représenté en position inactive face à une caisse (30) alors que figure 8, le même outil est représenté en position active de préhension de cette même caisse (30).

Cette manipulation des caisses (30) est possible grâce à l'aménagement de l'outil (1) qui comprend des moyens pour écarter simultanément tous les rails (6) en les maintenant parallèles entre eux et avec toujours le même écartement. Ces moyens ne font pas partie de l'invention mais ils permettent de tirer profit de cette dernière ; ils sont représentés très schématiquement sur les figures et en particulier figures 4, 6, 7 et 8.

Les moyens qui permettent de modifier l'écartement des rails (6) sont constitués de systèmes de glissières (31) qui sont disposées transversalement et interposées entre le corps (2) et lesdits rails (6). Ces rails (6) sont par ailleurs reliés entre eux au moyen d'un mécanisme du genre compas (32) qui permet de maintenir le même écartement entre lesdits rails (6), lequel écartement est modifié à volonté au moyen de deux vérins (33) qui agissent chacun sur lesdits rails (6) disposés latéralement, aux extrémités du corps (2) de l'outil (1).

Le système de pinces peut fonctionner grâce à cet aménagement particulier de l'outil (1) qui permet aux rampes (3p) de former une sorte d'étau. Ces rampes (3p) se présentent sous la forme d'une plaque (34) dont la partie supérieure est munie d'un pli (35) horizontal, à l'équerre, sur lequel est fixé le rail (7).

Pour éviter la déformation des plaques (34) qui constituent des mâchoires, ces plaques (34) comportent des renforts constitués de tiges (36) qui forment une sorte de contreventement ; chaque tige (36) s'étend à l'horizontale, perpendiculaire à sa plaque (34), et elle est guidée dans un palier (37) aménagé sur la rampe (3r) afin de pouvoir coulisser lors de l'écartement des rails (6).

Cette rampe (3r) est simplement constituée d'un rail (7) qui supporte les paliers (37) servant de guides aux tiges (36), comme représenté aussi figure 6.

Les rampes (3p) et (3r) forment un couple et elles sont installées simultanément dans leurs rails (6) respectifs. Elles sont immobilisées dans les rails (6) comme les rampes détaillées auparavant avec des moyens d'attache (10) rapide du genre sauterelle et elles sont également maintenues dans un plan vertical au moyen de la cheville (19) qui est installée sur le talon (9), laquelle cheville (19) coopère avec une pièce (38) en saillie, installée sur la partie arrière des rampes (3p) et (3r), figure 6.

La figure 9 représente de façon schématique, une installation de conditionnement ou de reconditionnent de bouteilles, par exemple. Cette installation comprend : - un poste (44) pour la prise en charge des bouteilles et une ligne (45) par laquelle sont introduites les palettes ou autres contenant lesdites bouteilles ou des lots de bouteilles à reconditionner, - au moins une ligne (46) de transit ou d'évacuation desdites palettes ou autres lorsqu'elles sont vides, - au moins une ligne (47) d'amenée et de stockage des palettes ou des caisses destinées à recevoir les bouteilles ou les lots reconditionnés, - au moins une ligne (48) d'évacuation des palettes ou des caisses de bouteilles nouvellement conditionnées et au moins un poste (49) de palettisation, - un robot (50) manipulateur dont l'outil (1) est installé sur un portique (51) pour balayer tous les postes ou les lignes détaillés ci-dessus, lequel robot (50) manipulateur comporte un outil (1) tel que décrit auparavant, qui circule au-dessus des postes (44, 49) et au-dessus des lignes (45) à (48).

Une variante de cette installation est décrite figure 10 ; elle diffère par le fait que le robot (52) manipulateur comporte un bras (53) qui est mobile autour d'un axe vertical. Ce bras (53) comporte à son extrémité, un outil (1) tel que décrit précédemment, qui circule aussi au-dessus des différents postes (44), (49) ou des lignes (45) à (48).

Pour permettre à l'opérateur d'intervenir rapidement au niveau de l'outil (1) afin de changer sa configuration, il dispose d'un ou de plusieurs magasins (60) ambulants ; chaque magasin est par exemple, aménagé pour contenir au moins un jeu de rampes (3) qui sont destinées à être installées sur ledit outil (1). La possibilité de placer ce magasin (60) à proximité immédiate de l'outil (1), fait gagner du temps à l'opérateur et réduit la fatigue causée par les manipulations.

Ce magasin (60) est représenté schématiquement figure 11, à une échelle plus grande que celle qui a été utilisée pour représenter les deux installations des figures 9 et 10. Il est constitué d'un châssis (61) qui peut être monté sur des roulettes (62), lequel châssis est muni d'une structure centrale en forme de panneau (63) qui comporte des bras (64). Ces bras (64) sont perpendiculaires au panneau (63) ; ils s'étendent à l'horizontale et sont disposés à plusieurs niveaux, par couples, pour accueillir les rampes (3). Ces rampes (3) sont accrochées aux bras (64) au moyen des orifices (21) aménagés dans les caissons (13).

Les rampes (3) peuvent aussi comporter d'autres équipements que des têtes de préhension de bouteilles. Elles peuvent aussi être équipées de pinces, de ventouses comme détaillées auparavant...etc., ce qui confère à l'outil (1) une très grande polyvalence.

Ces rampes (3p), (3r) sont stockables de la même façon sur les bras (64) du magasin (60).

## Revendications

1. Outil de robot manipulateur pour prendre et déplacer des objets, lequel outil comprend un corps (2) sur lequel se greffent des équipements de préhension desdits objets, lequel corps (2) comporte des moyens en forme de glissières (5), interposés entre ce dernier et des rampes (3) qui portent lesdits équipements, lesquelles glissières (5) sont parallèles entre elles et sont constituées de rails fixes (6) solidaires dudit corps (2), chacun de ces rails fixes étant muni de moyens d'assemblage du genre rainure pour accueillir un autre rail (7) de forme complémentaire, mobile par rapport audit corps (2) et situé à la partie supérieure de chacune desdites rampes (3), **caractérisé en ce qu'**il comporte des moyens de solidarisation rapide de chaque rampe (3) sur ledit corps, lesquels moyens consistant d'une part, en un talon (9) disposé à la partie arrière du rail fixe (6) dudit corps (2), lequel talon (9) forme une butée pour le calage longitudinal du rail mobile (7) de la rampe (3) correspondante qui est associée audit rail fixe et, d'autre part, à la partie avant ces moyens de solidarisation consistant en des moyens d'attache rapide (10) interposés entre le rail mobile (7) de ladite rampe (3) et ledit rail fixe (6) laquelle attache rapide est, par exemple, du type dénommé couramment "sauterelle".

2. Outil de robot manipulateur selon la revendication 1, **caractérisé en ce que** la rampe (3) se présente sous la forme d'un caisson (13) qui s'étend entre le système de glissière (5) et l'équipement de préhension du genre têtes (4), en forme de tulipe, du type à fonctionnement pneumatique, lequel caisson (13) renferme les différents conduits (14) et organes de raccordement et d'alimentation desdites têtes (4).

3. Outil de robot manipulateur selon la revendication 1, **caractérisé en ce que** la rampe (3) se présente sous la forme d'une barre (23) réalisée en matériau synthétique, usinée à sa partie supérieure pour façonner le rail (7) du système de glissières (5) et usinée dans sa masse pour constituer les canaux d'alimentation (25) pour des équipements du genre ventouses (22), lesquelles ventouses (22) sont disposées à la partie inférieure de ladite barre (23).

4. Outil de robot manipulateur selon l'une quelconque des revendications 2 ou 3, **caractérisé en ce qu'**il comporte un dispositif à raccord (15) rapide interposé entre la face d'extrémité arrière de la rampe (3) et le talon (9) du rail fixe (6) pour réaliser l'alimentation pneumatique, lequel talon (9) se présente sous la forme d'une véritable paroi aménagée à l'équerre à l'extrémité dudit rail fixe (6).

5. Outil de robot manipulateur selon l'une quelconque des revendications 1 à 4, lequel outil est muni de moyens en forme de compas (32) qui permettent de modifier l'écartement des rails fixes (6), **caractérisé en ce qu'**il comporte des rampes (3) munies d'aménagements permettant de réaliser un système de pinces, lesquels aménagements consistent en une plaque (34) installée sur une rampe (3p), faisant office de mâchoire, laquelle plaque (34) comporte des moyens du genre tiges (36) qui forment un contreventement en coopération avec des moyens du genre paliers (37) disposés sur un rampe (3r) adjacente.

6. Outil de robot manipulateur selon l'une quelconque des revendications 1 à 5, **caractérisé en ce qu'**il comporte des moyens pour caler dans un plan vertical chaque rampe (3) par rapport à son rail fixe (6), associé lesquels moyens sont interposés entre l'extrémité de ladite rampe (3) et la partie inférieure du talon (9) dudit rail (6), et sont constitués d'une cheville (19) disposée, par exemple, sur ledit talon (9), coopérant avec un orifice aménagé dans ladite extrémité de ladite rampe.

7. Outil de robot manipulateur selon l'une quelconque des revendications 1 à 6, **caractérisé en ce qu'**il comporte au moins une rampe munie, sur ses flancs, d'orifices disposés à sa partie avant et à sa partie arrière, permettant son stockage par accrochage sur des bras supports horizontaux, et munie également de poignées disposées entre lesdits orifices d'accrochage, pour faciliter sa manipulation.

8. Installation de reconditionnement de bouteilles comprenant : - au moins un poste (44) de prise en charge et une ligne (45) servant à l'introduction des palettes, ou autres, contenant les bouteilles à reconditionner, - au moins une ligne (46) de transit ou d'évacuation desdites palettes, ou autres, lorsqu'elles sont vides, - au moins une ligne (47) d'amenée et de stockage des palettes ou des caisses destinées à recevoir les bouteilles ou les lots reconditionnés, - au moins une ligne (48) d'évacuation des palettes ou caisses contenant les bouteilles reconditionnées et au moins un poste (49) de palettisation, - un robot de manipulation des bouteilles, lequel robot (50, 52) comporte un outil (1) selon l'une quelconque des revendications 1 à 7, - des moyens de stockage des rampes (3) dudit outil (1) en forme de magasin (60), pour mettre lesdites rampes (3) à disposition de l'opérateur à proximité dudit outil (1), lequel magasin (60) est constitué d'un châssis (61) pouvant être monté sur roulettes, lequel châssis (61) est muni d'une structure centrale en forme de panneau (63) qui porte des bras (64) horizontaux disposés par couples à plusieurs niveaux, lesquels bras (64) sont aptes à accueillir lesdites rampes (3), (3p), (3r).

## Claims

1. A manipulator robot tool for picking up and moving objects, said tool comprising a body (2) to which are fitted attachments for gripping said objects, said body (2) comprises slide-shaped means (5), inserted between said body and ramps (3) which carry said attachments, said slides (5) are parallel to one another and consist of fixed rails (6) connected to said body (2), each of these fixed rails being equipped with groove-like assembly means for accommodating another rail (7) having a complementary shape mobile, with respect to said body (2) and, located in the upper part of each of said ramps (3), **characterized in that** it comprises means for quickly securing each ramp (3) to said body, said means consisting, on the one hand, of a heel (9) placed at the back of the fixed rail (6) of said body (2), said heel (9) forms a stop for the longitudinal wedging of the mobile rail (7) of the corresponding ramp (3) which is associated with said fixed rail and, on the other hand, at the front, these securing means consisting of quick connection means (10) inserted between the mobile rail (7) of said ramp (3) and said fixed rail (6), said quick connection is, for example, of the type commonly called: lash cleat.

2. The manipulator robot tool as claimed in claim 1, **characterized in that** the ramp (3) has the shape of a caisson (13) extending between the slide system (5) and the bell-shaped, pneumatically actuated head-like gripping attachment (4), said caisson (13) containing the various lines (14) and connection and feed members of said heads (4).

3. The manipulator robot tool as claimed in claim 1, **characterized in that** the ramp (3) has the shape of a bar (23) made from a synthetic material, machined in its upper part to form the rail (7) of the slide system (5) and machined in its mass to constitute the feed channels (25) for attachments such as suckers (22), said suckers (22) being placed at the lower part of said bar (23).

4. The manipulator robot tool as claimed in either of claims 2 and 3, **characterized in that** it comprises a quick coupling device (15) inserted between the back end face of the ramp (3) and the heel (9) of the fixed rail (6) to provide the pneumatic air supply, said heel (9) having the shape of a genuine wall arranged squarely at the end of said fixed rail (6).

5. The manipulator robot tool as claimed in any one of claims 1 to 4, said tool being equipped with compass-shaped means (32) for changing the spacing of the fixed rails (6), **characterized in that** it comprises ramps (3) fitted with arrangements for producing a claw system, said arrangements consist of a plate (34) installed on a ramp (3p), acting as a jaw, said plate (34) comprising rod-like means (36) forming a bracing in cooperation with bearing-like means (37) placed on an adjacent ramp (3r).

6. The manipulator robot tool as claimed in any one of claims 1 to 5, **characterized in that** it comprises means for wedging each ramp (3) in a vertical plane with regard to its associated fixed rail (6), said means are inserted between the end of said ramp (3) and the lower part of the heel (9) of said rail (6), and consist of a pin (19) placed, for example, on said heel (9), cooperating with an orifice made in said end of said ramp.

7. The manipulator robot tool as claimed in any one of claims 1 to 6, **characterized in that** it comprises at least one ramp equipped, on its sides, with orifices placed in its front part and in its back part, for storing it by hooking on horizontal support arms, and also equipped with handles placed between said hooking orifices, to facilitate its handling.

8. A bottle repackaging installation comprising: - at least one loading station (44) and one line (45) for introducing pallets, or other items, containing the bottles to be repackaged, - at least one line (46) for transit or removal of said pallets, or other items, when they are empty, - at least one line (47) for conveying and storing the pallets or crates suitable for receiving the repackaged bottles or batches, - at least one line (48) for removing the pallets or crates containing the repackaged bottles, and at least one palletizing station (49), - one robot for manipulating the bottles, said robot (50, 52) comprising a tool (1) as claimed in any one of claims 1 to 7, - means for storing the ramps (3) of said tool (1) having the shape of a magazine (60), for making said ramps (3) available to the operator close to said tool (1), said magazine (60) consisting of a frame (61) mountable on rollers, said frame (61) is equipped with a central panel-shaped structure (63) which carries horizontal arms (64) arranged in pairs at several levels, said arms (64) being suitable for accommodating said ramps (3), (3p), (3r).

## Patentansprüche

1. Handhabungsroboterwerkzeug zum Ergreifen und Bewegen von Gegenständen, das einen Körper (2) umfasst, an dem Einrichtungen zum Ergreifen der Gegenstände aufgesteckt sind, welcher Körper (2) führungsförmige Mittel (5) aufweist, die zwischen diesem und die Einrichtungen tragenden Rampen (3) angeordnet sind, welche Führungen (5) untereinander parallel verlaufen und durch ortsfeste, mit dem Körper (2) fest verbundene Schienen (6) gebildet sind, wobei jede dieser ortsfesten Schienen mit nutartigen Verbindungsmitteln versehen ist, um eine andere formschlüssige Schiene (7) aufzunehmen, die in Bezug auf den Körper (2) beweglich ist und in dem oberen Bereich jeder der Rampen (3) angeordnet ist, **dadurch gekennzeichnet, dass** es Mittel zur schnellen Befestigung jeder Rampe (3) an dem Körper aufweist, die zum einen in einem Absatz (9) bestehen, der sich in dem hinteren Bereich der ortsfesten Schiene (6) des Körpers (2) befindet und einen Anschlag zur Längsblockierung der beweglichen Schiene (7) der entsprechenden, der ortsfesten Schiene zugeordneten Rampe (3) bildet, und zum anderen in dem vorderen Bereich in Schnellverschlüssen (10) bestehen, die zwischen der beweglichen Schiene (7) der Rampe (3) und der ortsfesten Schiene (6) angeordnet sind, welcher Schnellverschluss beispielsweise von der landläufig "Schnappverschluss" genannten Art ist.

2. Handhabungsroboterwerkzeug nach Anspruch 1, **dadurch gekennzeichnet, dass** die Rampe (3) als Kasten (13) ausgebildet ist, der sich zwischen dem Führungssystem (5) und der Greifeinrichtung von der Art von tulpenförmigen Köpfen (4) mit pneumatischer Funktionsweise erstreckt, welcher Kasten (13) die verschiedenen Leitungen (14) und Organe zum Anschließen und Versorgen der Köpfe (4) enthält.

3. Handhabungsroboterwerkzeug nach Anspruch 1, **dadurch gekennzeichnet, dass** die Rampe (3) als Stange (23) aus Kunststoff ausgebildet ist, die in ihrem oberen Bereich bearbeitet ist, um die Schiene (7) des Führungssystems (5) zu formen und in ihrer Masse bearbeitet ist, um die Versorgungskanäle (25) für Einrichtungen zu bilden, die von der Art von Saugnäpfen (22) sind, welche Saugnäpfe (22) in dem unteren Bereich der Stange (23) angeordnet sind.

4. Handhabungsroboterwerkzeug nach einem der Ansprüche 2 oder 3, **dadurch gekennzeichnet, dass** es eine Vorrichtung mit Schnellkupplung (15) aufweist, die zwischen der rückseitigen Endfläche der Rampe (3) und dem Absatz (9) der ortsfesten Schiene (6) angeordnet ist, um die pneumatische Versorgung herzustellen, welcher Absatz (9) sich als eine echte Wand darstellt, die rechtwinklig an dem Ende der ortsfesten Schiene (6) gebildet ist.

5. Handhabungsroboterwerkzeug nach einem der Ansprüche 1 bis 4, welches Werkzeug mit zirkelförmigen Mitteln (32) versehen ist, die es ermöglichen, den Abstand zwischen den ortsfesten Schienen (6) zu verändern, **dadurch gekennzeichnet, dass** es Rampen (3) aufweist, die mit Einrichtungen zum Ausbilden eines Zangensystems versehen sind, die in einer Platte (34) bestehen, die auf einer als Backe dienenden Rampe (3p) angebracht ist und stiftartige Mittel (36) aufweist, die in Zusammenwirken mit auf einer benachbarten Rampe (3r) angeordneten lagerartigen Mitteln (37) eine Aussteifung bilden.

6. Handhabungsroboterwerkzeug nach einem der Ansprüche 1 bis 5, **dadurch gekennzeichnet, dass** es Mittel aufweist, um jede Rampe (3) in Bezug auf ihre zugeordnete ortsfeste Schiene (6) in einer vertikalen Ebene zu blockieren, welche Mittel zwischen dem Ende der Rampe (3) und dem unteren Bereich des Absatzes (9) der Schiene (6) angeordnet sind und durch einen Zapfen (19) gebildet sind, der beispielsweise auf dem Absatz (9) angeordnet ist und mit einer in dem Ende der Rampe ausgebildeten Öffnung zusammenwirkt.

7. Handhabungsroboterwerkzeug nach einem der Ansprüche 1 bis 6, **dadurch gekennzeichnet, dass** es mindestens eine Rampe aufweist, die auf ihren Seiten mit Öffnungen versehen ist, die in ihrem vorderen Bereich und in ihrem hinteren Bereich angeordnet sind und ihre Lagerung durch Aufhängung an horizontalen Tragearmen ermöglichen, und ebenfalls mit Griffen versehen ist, die zwischen den Aufhängungsöffnungen angeordnet sind, um ihre Handhabung zu erleichtern.

8. Anlage zum Aufbereiten von Flaschen mit:
mindestens einer Übernahmestation (44) und einer Linie (45) zum Einführen von Paletten o.a. mit den aufzubereitenden Flaschen,
mindestens einer Linie (46) zum Durchführen oder zum Abführen der Paletten o.a., wenn sie leer sind,
mindestens eine Linie (47) zum Zuführen und Lagern der Paletten oder der Kisten, die dazu bestimmt sind, die aufbereiteten Flaschen oder Chargen aufzunehmen,
mindestens einer Linie (48) zum Abführen der die aufbereiteten Flaschen enthaltenden Paletten oder Kisten und mindestens einer Palettierstation (49),
einem Roboter zur Handhabung der Flaschen, welcher Roboter (50, 52) ein Werkzeug (1) nach einem der Ansprüche 1 bis 7 aufweist,
Mitteln zum Lagern der Rampen (3) des Werkzeugs (1) in Form eines Magazins (60), um die Rampen (3) der Bedienperson in der Nähe des Werkzeugs (1) zur Verfügung zu stellen, welches Magazin (60) durch einen Rahmen (61) gebildet ist, der auf Rollen montiert sein kann, welcher Rahmen (61) mit einer paneelförmigen Zentralstruktur (63) versehen ist, die horizontale Arme (64) trägt, die paarweise auf mehreren Ebenen angeordnet sind, welche Arme (64) zur Aufnahme der Rampen (3), (3p), (3r) geeignet sind.
